# EUROPEAN PATENT APPLICATION

(11) **EP 3 738 734 A1**
(43) Date of publication of application: **18.11.2020**
(21) Application number: 19382373.9
(22) Date of filing: 13.05.2019
(51) Int. Cl.: B26D 7/20

(54) **BRISTLE BRUSH**

(71) Applicant: Open Mind Ventures, S.L.U., 08700 Igualada Barcelona (ES)
(72) Inventor: Balsells Mercade, Antoni, 08700 IGUALADA BARCELONA (ES); Carrer Vives, Josep Mª, 08700 IGUALADA BARCELONA (ES); Balsells Mercade, Bernat, 08700 IGUALADA BARCELONA (ES); Lucas Serra, Santiago, 08700 IGUALADA BARCELONA (ES)
(74) Representative: Herrero & Asociados, S.L.

(57) **Abstract**

The bristle brush comprises a support plate (1), a plurality of bristles (2) emerging from one of the surfaces thereof, the distal ends of the bristles (2), the ones further from the support plate (1), defining a support surface intended to receive a piece to be transported and/or cut or handled, wherein the distal ends of the plurality of bristles (2) have a semi-spherical or conical shape ending in a tip.

It enables a bristle brush to be provided wherein the distal ends of said bristles have a shape which enables the bristles to move when a cutting blade or any other element comes into contact with them, without damaging them.

## Description

The present invention relates to a bristle brush, which is modular and enables forming, by joining a plurality of said brushes, a homogeneous base, such as an endless conveyor belt.

### Background of the invention

Brushes are currently known which, duly fixed to a set of mechanical elements, form a movable surface as an endless conveyor belt.

Said conveyor belts are used in different industrial fields to transport and/or handle elements which must be elevated, or which cannot be in contact with a rigid or continuous surface.

There are brushes comprising a plurality of bristles fixed to a support plate and multiple brushes are linked to form a larger surface or a conveyor belt.

An example of this type of brushes is described in EP 2 656 987 A1, which describes a plastic, modular and self-engaging bristle brush, comprising a set of runners including a pair of opposite guiding and self-centring ends which project from the perimeter of the brush, said runners being distributed so that the ends of contiguous brush runners are able to fit together by overlapping each other. Despite this example, there are multiple models of brushes in the industry with different shapes and anchors for joining said brushes together (forming a self-supporting surface) or joining these brushes to other elements (metal bars, plastic parts, etc.) of a machine.

In these currently known brushes, the distal end of the bristles, the one further from the support plate, is flat, meaning, substantially parallel with respect to the surface defined by the support plate.

This flat shape of the distal tip can have the drawback that when the brush is used as a support surface for cutting a material, the cutting blades can damage said distal tips, apart from other drawbacks.

Therefore, an object of the present invention is to provide a bristle brush wherein the distal ends of said bristles have a shape which enables the bristles to move when a cutting blade or any other element comes into contact with them, without damaging them.

### Description of the invention

The mentioned drawbacks are resolved with the bristle brush of the invention, while presenting other advantages which will be described below.

The bristle brush according to the present invention comprises a support plate, a plurality of bristles emerging from one of the surfaces thereof, the distal ends of the bristles, the ones further from the support plate, defining a support surface intended to receive a piece to be transported and/or cut or handled, manually or automatically, wherein the distal ends of the plurality of bristles have a semi-spherical or conical shape ending in a tip.

Thanks to this semi-spherical or conical shape of the distal ends of the bristles, in the case of contact with an element, for example, a cutting blade, the distal tip of the bristles moves laterally, eliminating the frontal impact and preventing the bristle from being damaged by said element, which lets the brush last longer.

According to a preferred embodiment, the assembly of the support plate and the bristles is made from a single part, for example, made of a plastic polymer.

Advantageously, said bristles are made of a flexible material, which facilitates the deflection of the distal end of the bristles.

Also, in the case of using said brushes as a cutting surface for flexible laminar materials, in the case of the distal end of the bristles being flat, a lower support material is required for the material to be cut, such as for example a sheet of paper. By using the brushes according to the present invention, which have the distal end of the semi-spherical or conical bristles, the use of said support material is avoided in many applications since the entry of the punches, dies or blades is smooth and does not deform the lower surface during penetration.

Advantageously, by having a point contact of the distal surface of the bristle, both in the conical embodiment and in the semi-spherical embodiment, with the flexible laminar material, greater securing is obtained since the distal end of the bristle sticks more into the flexible laminar material, unlike if a flat distal surface of the bristle were arranged, due to a greater point concentration of the force at the distal end of the bristle. This securing is even greater when working in a vacuum.

In the case of using the bristle brush of the present invention in applications such as manual handling, logistics, sorting, etc., the tips of the semi-spherical or conical bristles offer a softer entry of the hand into the bristles (meaning under the object suspended by the bristles of the bristle brush) and more pleasant for the operator.

### Brief description of the drawings

To better understand what has been set forth, several drawings are attached in which a practical embodiment is schematically depicted merely by way of non-limiting example.
Figure 1 is an upper perspective view of a bristle brush according to the present invention;
Figure 2A is an upper perspective view of a bristle brush according to the present invention, with an anchoring system different from Figure 1;
Figure 2B is a lower perspective view of a bristle brush according to the present invention, with an anchoring system different from Figure 1;
Figure 3 is a perspective view of the distal ends of the bristles of the bristle brush according to the present invention, according to a first embodiment;
Figure 4 is a perspective view of the distal ends of the bristles of the bristle brush according to the present invention, according to a second embodiment;
Figure 5 is a side view of the interaction of a blade with a bristle of the bristle brush according to the present invention, according to a first embodiment;
Figure 6 is a side view of the interaction of a blade with a bristle of the bristle brush according to the present invention, according to a second embodiment;
Figure 7 is a side view of the interaction of laminar material with the bristles of the bristle brush according to the present invention, according to a

### first embodiment; and

Figure 8 is a side view of the interaction of laminar material with bristles of the bristle brush according to the present invention, according to a second embodiment.

### Description of preferred embodiments

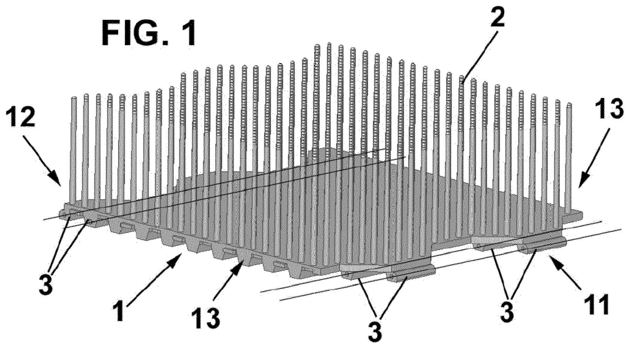

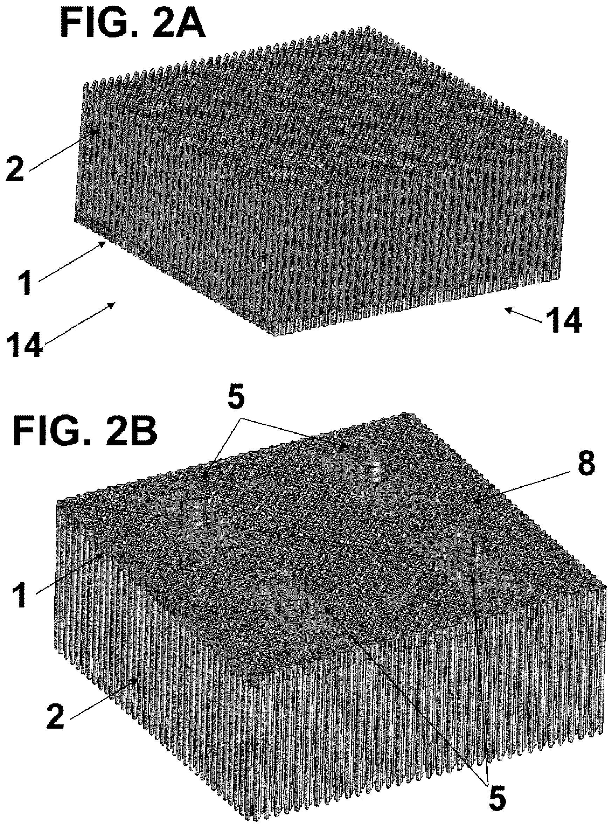

The bristle brush according to the present invention, shown in Figures 1 and 2, comprises a support plate 1 from which a plurality of flexible bristles 2 extend, in particular, they extend from an upper surface of said support plate 1.

According to a preferred embodiment, the assembly of the support plate 1 and the bristles 2 is made from a single part, for example, made of a plastic polymer.

According to a first embodiment shown, said support plate 1 defines four edges, a leading edge 11, a trailing edge 12 and two side edges 13. Said leading 11 and trailing 12 edges comprise complementary recesses and projections, said projections having, for example, a trapezoidal shape, defining a straight central portion and two side portions that are also straight, at an oblique angle.

Said support plate 1 also comprises coupling elements, which in this embodiment are anchors 3, each of which comprises a longitudinal hole for the placement of a traction rod.

Said anchors 3 are associated in pairs, such that they define two longitudinal axes for corresponding traction rods. Two of these traction rods, not shown in the figures, are placed on the leading edge 11 and two traction rods are placed on the trailing edge 12.

Furthermore, said support plate 1 comprises a plurality of notches 14 on the lower surface thereof in order to enable the traction thereof by means of gears (not shown), when a plurality of brushes according to the present invention is used as a conveyor belt.

According to a second embodiment shown in Figures 2A and 2B, said support plate 1 defines four equal edges 14, and on the lower surface of the support plate 1 there are multiple coupling elements 5 in the form of a clip. Furthermore, in said representation, the support plate 1 has multiple holes 8 for transmitting any fluid, for example, air.

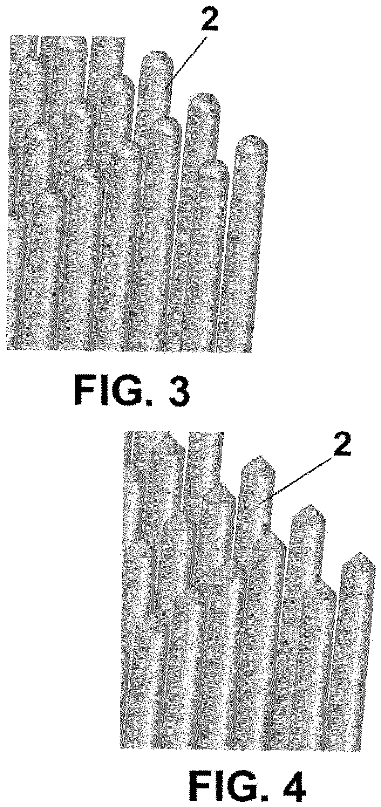

In Figures 3 and 4, the distal ends of the bristles 2 of the brush are shown, meaning, the ends further from the support plate 1.

According to the embodiment of Figure 3, the distal ends of the bristles 2 have a semi-spherical shape, while according to the embodiment of Figure 4, the distal ends of the bristles 2 have a conical shape.

In this manner, the distal ends do not have a flat upper shape, thus preventing the bristles 2 from being damaged, for example, by a cutting blade when cutting a material placed on the brush, since this shape of the distal ends of the bristles 2 will cause said bristles 2 to deviate laterally.

Advantageously, this semi-spherical or conical shape of the distal ends of the bristles also improves the interaction of the bristles with the laminar material to be cut which is placed thereon, thus avoiding the need for an additional support element, such as a sheet of paper.

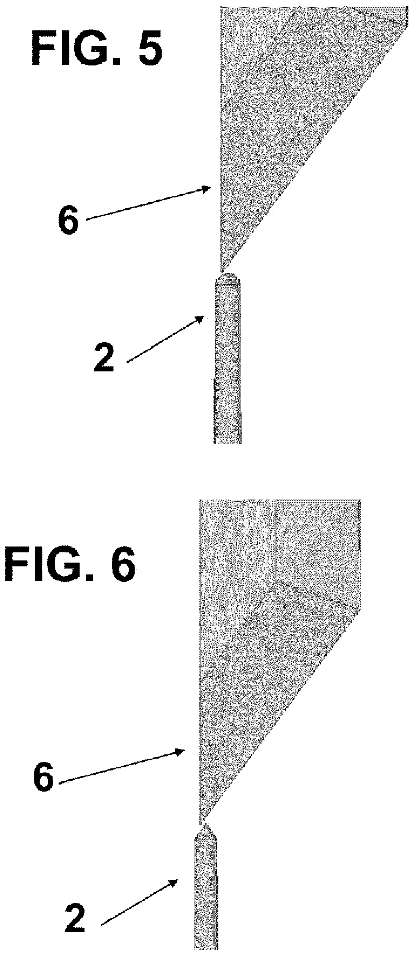

Figures 5 and 6 show the interaction of a blade 6 with the distal tip of the bristle, observing how the impact of the blade with the tip is more likely to deflect the bristle than if the distal end of the bristle were flat.

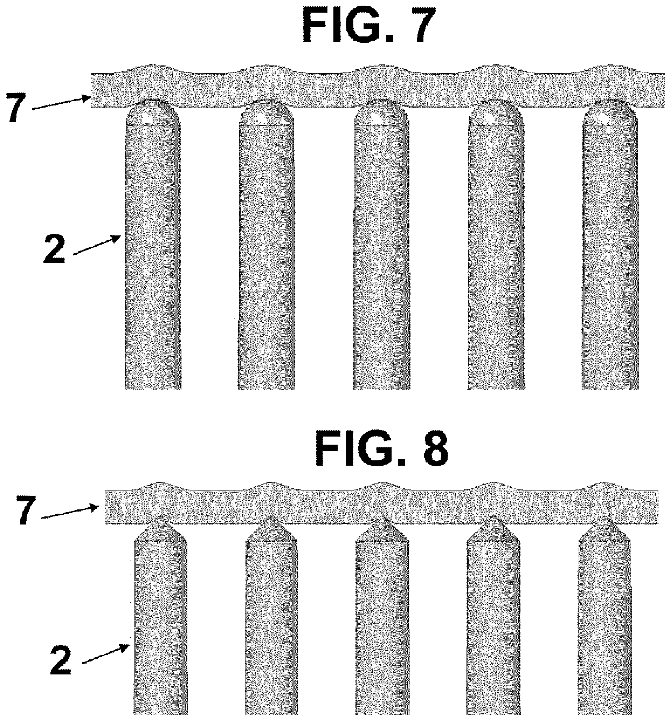

Figures 7 and 8 show the interaction of a flexible laminar material 7 with the distal tip of the bristle, observing how the bristles 2 stick into the flexible laminar material 7, thus increasing the fixing of the flexible laminar material with the bristle brush.

Despite the fact that reference has been made to a specific embodiment of the invention, it is evident for the person skilled in the art that numerous variations and changes may be made to the bristle brush described, and that all the aforementioned details may be substituted by other technically equivalent ones, without detracting from the scope of protection defined by the attached claims.

## Claims

1. A bristle brush, comprising a support plate (1), a plurality of bristles (2) emerging from one of the surfaces thereof, the distal ends of the bristles (2), the ones further from the support plate (1), defining a support surface intended to receive a piece to be transported and/or cut or handled,
**characterised in that** the distal ends of the plurality of bristles (2) have a semi-spherical or conical shape ending in a tip.

2. The bristle brush according to claim 1, wherein the assembly of the support plate (1) and the bristles (2) is made from a single part.

3. The bristle brush according to claim 1 or 2, wherein said assembly of the support plate and the bristles (2) is made of a polymer.

4. The bristle brush according to any one of the preceding claims, wherein said bristles (2) are made of a flexible material.

5. The bristle brush according to any one of the preceding claims, which contains coupling elements (3,5).

6. The bristle brush according to any one of the preceding claims, wherein the support plate (1) contains a plurality of holes (8).
